# EUROPÄISCHE PATENTSCHRIFT

(11) **EP 3 999 995 B1**
(45) Veröffentlichungstag und Bekanntmachung des Hinweises auf die Patenterteilung: **27.11.2024**
(21) Anmeldenummer: 20840004.4
(22) Anmeldetag: 10.07.2020
(51) Int. Cl.: G06K 7/10, F21V 5/00, G02B 5/02

(54) **PASSIVE BELEUCHTUNGSVORRICHTUNG**
PASSIVE ILLUMINATION DEVICE
DISPOSITIF D'ÉCLAIRAGE PASSIF

(30) Priorität: 18.07.2019 DE 102019119501
(43) Veröffentlichungstag der Anmeldung: 25.05.2022
(73) Patentinhaber: IOSS Intelligente optische Sensoren & Systeme GmbH, 78315 Radolfzell (DE)
(72) Erfinder: GÄSSLER, Joachim, 78166 Donaueschingen (DE); RICHTER, Harald, 78315 Radolfzell (DE); KONZ, Christian, 78337 Öhningen-Wangen (DE)
(74) Vertreter: Thum & Partner I Thum Mötsch Weickert Patentanwälte PartG mbB
(86) Internationale Anmeldenummer: PCT/EP2020/069590
(87) Internationale Veröffentlichungsnummer: WO 2021/009059

(56) Entgegenhaltungen:
- EP-A1- 2 592 328
- WO-A1-2006/065619
- DE-A1- 102007 043 609
- DE-A1- 102017 118 246
- US-B1- 6 595 422

## Beschreibung

### Stand der Technik

Die Erfindung betrifft eine passive Beleuchtungsvorrichtung nach Anspruch 1 und ein System mit der passiven Beleuchtungsvorrichtung und mit einem Bildaufnehmer, insbesondere einem Codelese- und/oder Codeverifikationsgerät, nach Anspruch 11.

Es ist bereits vorgeschlagen worden, diffuse Beleuchtungen für Codelesegeräte durch aktive Beleuchtungsvorrichtungen bereitzustellen, welche über eigene Lichtquellen verfügen.

Die Veröffentlichungen WO 2006/065619 A1, US 6,595,422 B1 und EP 2 592 328 A1 zeigen Codeleser mit Beleuchtungsvorrichtungen, welche jeweils eine Diffusorelement in Form einer Streuschale zu einer Bereitstellung einer diffusen Beleuchtung eines Untersuchungsbereichs aufweisen.

Die DE 10 2007 043 609 A1 zeigt eine Beleuchtungsvorrichtung nach dem Oberbegriff des Anspruchs 1.

Die Aufgabe der Erfindung besteht insbesondere darin, eine gattungsgemäße Vorrichtung mit verbesserten Eigenschaften hinsichtlich einer Konstruktion bereitzustellen. Die Aufgabe wird erfindungsgemäß durch die Merkmale der Patentansprüche 1 und 11 gelöst, während vorteilhafte Ausgestaltungen und Weiterbildungen der Erfindung den Unteransprüchen entnommen werden können.

### Vorteile der Erfindung

Die Erfindung betrifft eine passive Beleuchtungsvorrichtung zur Verwendung mit zumindest einer Lichtquelleneinheit eines Bildaufnehmers, insbesondere eines Codelese- und/oder Codeverifikationsgeräts, wobei die passive Beleuchtungsvorrichtung zumindest eine Diffusoreinheit aufweist, welche dazu vorgesehen ist, von der Lichtquelleneinheit bereitgestelltes Licht in zumindest im Wesentlichen diffuses Beleuchtungslicht zur Beleuchtung zumindest eines Beleuchtungsbereichs umzuwandeln, und welche zumindest ein Diffusorelement mit zumindest einer Streuschale zur Streuung des Lichts aufweist.

Hierdurch kann insbesondere eine Konstruktion vereinfacht werden. Vorteilhaft kann auf aktive Einheiten, wie beispielsweise Lichtquellen, verzichtet werden. Besonders vorteilhaft kann eine einfache Montage und/oder Demontage der passiven Beleuchtungsvorrichtung am Bildaufnehmer ermöglicht werden, um zwischen einer direkten Beleuchtung und einer diffusen Beleuchtung zu wechseln.

Unter einer "Beleuchtungsvorrichtung" soll insbesondere eine Einheit verstanden werden, welche dazu vorgesehen ist, insbesondere mithilfe des von der externen Lichtquelleneinheit bereitgestellten Lichts eine vordefinierte Beleuchtung des Beleuchtungsbereichs bereitzustellen. Insbesondere kann die passive Beleuchtungsvorrichtung beliebige, dem Fachmann bekannte, passive optische Einheiten zur Bereitstellung der Beleuchtung aufweisen, wie beispielsweise Spiegel, Diffusoren, Filter und/oder optische Wellenleiter. Darunter, dass die Beleuchtungsvorrichtung "passiv" ist, soll insbesondere verstanden werden, dass die Beleuchtungsvorrichtung frei von aktiven Einheiten wie beispielsweise eigenen Lichtquellen und/oder schaltbaren optischen Einheiten ist. Vorteilhaft ist die passive Beleuchtungsvorrichtung ohne eine eigene Energiequelle verwendbar. Vorzugsweise ist die passive Beleuchtungsvorrichtung dazu vorgesehen, gemeinsam mit dem Bildaufnehmer eine Baueinheit, insbesondere ein System, insbesondere ein Codelese- und/oder Codeverifikationssystem, auszubilden.

Vorteilhaft weist die passive Beleuchtungsvorrichtung zumindest einen Lichtaufnahmebereich auf, welcher insbesondere dazu vorgesehen ist, das von der Lichtquelleneinheit bereitgestellte Licht aufzunehmen und vorzugsweise ungehindert passieren zu lassen. Besonders vorteilhaft weist die passive Beleuchtungsvorrichtung zumindest einen Lichtbearbeitungsbereich auf, welcher insbesondere dazu vorgesehen ist, das von der Lichtquelleneinheit bereitgestellte Licht zu bearbeiten und das diffuse Beleuchtungslicht bereitzustellen. Insbesondere ist die Streuschale innerhalb des Lichtbearbeitungsbereichs angeordnet. Vorzugsweise ist der Lichtbearbeitungsbereich bei einer Betrachtung aus dem Beleuchtungsbereich heraus vor dem Lichtaufnahmebereich angeordnet.

Vorteilhaft ist die passive Beleuchtungsvorrichtung von dem Bildaufnehmer abnehmbar. Beispielsweise könnte die passive Beleuchtungsvorrichtung durch eine Schnappverbindung und/oder Schraubverbindung lösbar an dem Bildaufnehmer befestigt sein. Bevorzugt ist die passive Beleuchtungsvorrichtung auf den Bildaufnehmer aufsteckbar.

Unter einem "Bildaufnehmer" soll insbesondere ein Gerät verstanden werden, welches dazu vorgesehen ist, eine Abbildung des Beleuchtungsbereichs aufzunehmen und vorteilhaft auszuwerten. Denkbar wäre, dass der Bildaufnehmer eine Kamera und/oder ein optisches Messgerät und/oder ein Kontrollgerät aufweist. Möglich wäre, dass der Bildaufnehmer dazu vorgesehen ist, Abbildungen von Objekten innerhalb des Beleuchtungsbereichs zur Ermittlung von Identifizierungsmerkmalen und/oder Messgrößen und/oder Abbildungen von Objekten zur Ausführung von Kontrollfunktionen, beispielsweise einer Vollständigkeitskontrolle, bereitzustellen. Im Fall, dass der Bildaufnehmer als ein Codelese- und/oder Codeverifikationsgerät ausgebildet ist, ist der Bildaufnehmer vorteilhaft dazu vorgesehen, zumindest einen in dem Beleuchtungsbereich angeordneten Code zu lesen und/oder zu verifizieren.

Unter "von der Lichtquelleneinheit bereitgestelltem Licht" soll in diesem Zusammenhang insbesondere Licht verstanden werden, welches in zumindest einem Betriebszustand von der Lichtquelleneinheit erzeugt ist und durch den Lichtaufnahmebereich der passiven Beleuchtungsvorrichtung eindringt und vorzugsweise noch nicht im Beleuchtungsbereich und insbesondere noch nicht im Lichtbearbeitungsbereich angekommen ist. Unter "diffusem Beleuchtungslicht" soll in diesem Zusammenhang insbesondere Licht verstanden werden, welches aus dem Lichtbearbeitungsbereich in Richtung des Beleuchtungsbereichs austritt und vorzugsweise noch nicht im Beleuchtungsbereich angekommen ist.

Unter einer "Diffusoreinheit" soll insbesondere eine Einheit verstanden werden, welche dazu vorgesehen ist, die Diffusoreinheit passierendes, vorzugsweise direktes, Licht in diffuses Streulicht, bevorzugt das diffuse Beleuchtungslicht, umzuwandeln. Vorteilhaft weist die Diffusoreinheit, vorzugsweise das Diffusorelement und besonders bevorzugt die Streuschale zumindest ein transluzentes Material auf und ist vorteilhaft aus einem solchen ausgebildet. Unter einem "transluzenten Material" soll insbesondere ein Material verstanden werden, welches ein Streumaß von mindestens 50°%, vorteilhaft mindestens 70°% und besonders vorteilhaft mindestens 90°% aufweist. Unter einem "Streumaß" eines Körpers soll insbesondere ein Verhältnis einer Streulichtintensität, das heißt insbesondere einer Intensität des gestreuten Lichts, auf einer Ausgangsseite des Körpers zu einer Eingangslichtintensität auf einer Eingangsseite des Körpers verstanden werden. Insbesondere besitzt ein theoretisches, perfekt transparentes Material ein Streumaß von Null. Transluzente Materialien können insbesondere auch als "milchglasartig" bezeichnet werden. Denkbar wäre, dass die Diffusoreinheit weitere opake Materialien aufweist.

Unter einer "Streuschale" soll insbesondere ein Teil des Diffusorelements verstanden werden, welcher zumindest ein transluzentes Material aufweist und insbesondere vollständig aus dem transluzenten Material ausgebildet sein kann. Erfindungsgemäß weist zumindest die Streuschale eine bei einer Betrachtung aus dem Beleuchtungsbereich heraus, insbesondere gleichmäßige, konkave Formgebung auf. Insbesondere definiert die Streuschale einen Raumwinkelbereich, aus welchem das diffuse Beleuchtungslicht auf den Beleuchtungsbereich trifft. Vorzugsweise beträgt der Raumwinkelbereich zumindest im Wesentlichen 2π. Bevorzugt weicht der Raumwinkelbereich um höchstens 20°%, vorteilhaft um höchstens 15°% und besonders vorteilhaft um höchstens 10°% von 2π ab. Insbesondere weist die Streuschale zumindest einen Durchlass auf, welcher dazu vorgesehen ist, vom Beleuchtungsbereich kommendes Licht, insbesondere an zumindest einem im Beleuchtungsbereich angeordneten Objekt reflektiertes Licht, zur Bereitstellung der Abbildung durchzulassen. Insbesondere unterscheidet sich das von dem Objekt reflektierte Licht von dem von der Lichtquelleneinheit bereitgestellten Licht und dem diffusen Beleuchtungslicht. Denkbar wäre, dass der Durchlass zumindest ein transparentes oder halbdurchlässiges Material aufweist. Vorzugsweise ist der Durchlass als eine Ausnehmung der Streuschale ausgebildet.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere ist "vorgesehen" nicht als bloße Eignung zu verstehen.

Ferner wird vorgeschlagen, dass die Streuschale zumindest eine Innenfläche aufweist, welche als eine Teilfläche eines imaginären Ovoid, insbesondere einer imaginären Kugel, ausgebildet ist. Unter einer "Teilfläche" des Ovoid soll in diesem Zusammenhang insbesondere ein Teil einer Oberfläche des Ovoid verstanden werden, welcher zumindest im Wesentlichen schalenförmig ist. Vorzugsweise weist der Ovoid zumindest eine Symmetrieachse auf, welche vorteilhaft durch den Durchlass und insbesondere durch einen Flächenschwerpunkt des Durchlasses verläuft. Hierdurch kann insbesondere ein Raumwinkelbereich des diffusen Beleuchtungslichts auf konstruktiv einfache Weise erhöht werden.

In einer alternativen Ausgestaltung wird vorgeschlagen, dass die Streuschale zumindest eine Innenfläche aufweist, welche als eine Teilfläche eines imaginären Zylinders ausgebildet ist. Unter einer "Teilfläche" des Zylinders soll in diesem Zusammenhang insbesondere ein Teil einer Mantelfläche des Zylinders verstanden werden, welcher bei einer Betrachtung entlang einer Längsachse des Zylinders einen zumindest im Wesentlichen schalenförmigen Querschnitt aufweist. Vorteilhaft verläuft die Längsachse des Zylinders parallel zum Durchlass, insbesondere zu einer Haupterstreckungsebene des Durchlasses. Hierdurch können abzubildende Bereiche, welche auf einem länglichen Objekt angeordnet sind, durch Ausrichten einer Längsachse des Objekts parallel zur Längsachse des Zylinders auf einfache Weise in den Beleuchtungsbereich eingeführt werden.

In einer weiteren alternativen Ausgestaltung wird vorgeschlagen, dass die Streuschale zumindest eine Innenfläche aufweist, welche als eine Teilfläche eines imaginären Konus, insbesondere eines senkrechten Kegels, ausgebildet ist. Unter einer "Teilfläche" des Konus soll in diesem Zusammenhang insbesondere ein zumindest im Wesentlichen schalenförmiger Teil einer Mantelfläche des Konus und vorteilhaft die gesamte Mantelfläche eines aus dem Konus gebildeten Kegelstumpfes verstanden werden. Hierdurch kann insbesondere ein Raumwinkelbereich des diffusen Beleuchtungslichts auf konstruktiv einfache Weise erhöht werden.

Um eine anpassbare Ausgestaltung der Diffusoreinheit zu erreichen, ist erfindungsgemäß vorgesehen, dass die Diffusoreinheit zumindest ein optisches Element aufweist, welches dazu vorgesehen ist, von zumindest einer Lichtquelle der Lichtquelleneinheit bereitgestelltes Licht und/oder aus diesem Licht erzeugtes diffuses Streulicht, in Richtung des Beleuchtungsbereichs umzulenken, vorzugsweise als diffuses Beleuchtungslicht. Darunter, dass das optische Element dazu vorgesehen ist, Licht "umzulenken", soll insbesondere verstanden werden, dass das optische Element insbesondere durch zumindest eine Reflexion eine Verlaufsrichtung Licht, welches das optische Element passiert, ändert. Vorteilhaft kann die Ausgestaltung der Diffusoreinheit an verschiedene Anordnungen und/oder Ausrichtungen der Lichtquelleneinheit des Bildaufnehmers angepasst werden.

Um eine Abbildungsqualität des Beleuchtungsbereichs auf konstruktiv einfache Weise zu verbessern, wird vorgeschlagen, dass das optische Element dazu vorgesehen ist, von dem Beleuchtungsbereich reflektiertes Licht zumindest teilweise, insbesondere zumindest zu einem Intensitätsbruchteil von 50 %, durchzulassen, insbesondere frei von Streuprozessen und/oder Reflexionen passieren zu lassen. Insbesondere trägt das optische Element zur Erzeugung eines Strahlengangs bei, welcher von der Lichtquelle des Bildaufnehmers über Umlenkung am optischen Element zum Beleuchtungsbereich und über Reflexion am Beleuchtungsbereich und Passieren des optischen Elements zu einer Detektoreinheit des Bildaufnehmers führt. Bevorzugt ist das optische Element bei einer Betrachtung von dem Beleuchtungsbereich aus hinter dem Durchlass der Streuschale angeordnet. Besonders bevorzugt weist das optische Element zumindest ein Absorptionselement auf, welches dazu vorgesehen ist, einen bei der Umlenkung des von der Lichtquelle der Lichtquelleneinheit bereitgestellten Lichts und/oder des diffusen Beleuchtungslichts zum Beleuchtungsbereich durchgelassenen Lichtanteil zu absorbieren, um den Einfluss von unerwünschtem Licht, insbesondere Falschlicht, auf der Detektoreinheit zu vermeiden. Vorteilhaft ist das Absorptionselement als eine Beschichtung ausgebildet. Alternativ könnte das Absorptionselement auch als ein von einer Beschichtung verschiedenes, vorzugsweise plattenförmiges Element ausgebildet sein. Denkbar wäre auch, dass das Absorptionselement separat zu dem optischen Element ausgebildet ist. Vorzugsweise weist das Absorptionselement einen Brechungsindex auf, welcher zu einem Brechungsindex eines restlichen optischen Elements identisch ist, um eine Reflexion des durchgelassenen Lichtanteils an dem Absorptionselement zu vermeiden. Vorteilhaft kann eine Beleuchtung des Beleuchtungsbereichs ausgehend von dem Durchlass der Streuschale erreicht und somit ein lückenfreier Raumwinkelbereich des diffusen Beleuchtungslichts erreicht werden.

Außerdem wird vorgeschlagen, dass das optische Element zumindest einen halbdurchlässigen Spiegel aufweist. Hierdurch kann insbesondere ein Bauraum des optischen Elements reduziert und eine Konstruktion des optischen Elements vereinfacht werden. Vorteilhaft können das Umlenken und das Durchlassen von Licht gemeinsam von einem Teilbereich des optischen Elements bereitgestellt werden. Denkbar wäre, dass das optische Element vollständig als ein halbdurchlässiger Spiegel ausgebildet ist. Alternativ könnte das optische Element einen spiegelnden Bereich und einen von dem spiegelnden Bereich beabstandeten transparenten Bereich aufweisen.

Erfindungsgemäß ist das optische Element als ein Strahlteilerwürfel ausgebildet und das Diffusorelement weist zumindest eine Aufnahme zur formschlüssigen Halterung des optischen Elements auf. Unter einem "Strahlteilerwürfel" soll insbesondere ein kubisches Element verstanden werden, welches zumindest einen halbdurchlässigen Spiegel aufweist, welcher beispielsweise eine Seitenfläche des Elements und bevorzugt eine Diagonalfläche des Elements bildet. Vorteilhaft bildet das Absorptionselement eine Beschichtung einer Seitenfläche des optischen Elements. Beispielsweise kann die Aufnahme zumindest einen hervorstehenden Rand und/oder zumindest einen Rahmen und/oder zumindest eine als ein Negativ des Objekts ausgebildete Vertiefung aufweisen. Hierdurch kann insbesondere eine Montage des optischen Elements auf konstruktiv einfache Weise vereinfacht werden. Vorteilhaft kann das optische Element durch einen einfachen Steckprozess an dem Diffusorelement befestigt werden. Alternativ könnte das optische Element durch zumindest eine Schnappverbindung und/oder Schraubverbindung und/oder Klebeverbindung an dem Diffusorelement befestigt sein.

Erfindungsgemäß ist vorgesehen, dass die Diffusoreinheit, und zwar das Diffusorelement, zumindest einen Teilbereich aufweist, welcher dazu vorgesehen ist, von der Lichtquelle bereitgestelltes Licht in das optische Element einzuspeisen. Darunter, dass der Teilbereich Licht in ein Element "einspeist", soll in diesem Zusammenhang insbesondere verstanden werden, dass der Teilbereich durch zumindest eine Reflexion und/oder Transmission und/oder Streuung dazu beiträgt, dass das von einer Lichtquelle bereitgestellte Licht in das Element einfällt. Vorteilhaft weist die Diffusoreinheit zumindest einen weiteren Teilbereich auf, welcher ein transluzentes Material aufweist und zwischen dem Teilbereich und dem optischen Element angeordnet ist. Hierdurch kann insbesondere eine Abbildungsqualität der Abbildung auf konstruktiv einfache Weise verbessert werden. Vorteilhaft kann bei einer Anordnung des optischen Elements hinter dem Durchlass auf zusätzliche Lichtquellen zu einer Einspeisung von Licht in das optische Element verzichtet werden.

Es wäre möglich, dass der Teilbereich sämtliches von der Lichtquelle bereitgestelltes Licht in das optische Element einspeist. Um eine Abbildungsqualität der Abbildung weiter zu steigern, wird vorgeschlagen, dass der Teilbereich zusätzlich dazu vorgesehen ist, von der Lichtquelle bereitgestelltes Licht in die Streuschale einzuspeisen. Insbesondere weist der Teilbereich eine Oberfläche auf, welche einen Lichtanteil des von der Lichtquelle bereitgestellten Lichts durchlässt, insbesondere diffus streut, und einen weiteren Lichtanteil des von der Lichtquelle bereitgestellten Lichts reflektiert. Alternativ oder zusätzlich könnte die Oberfläche zumindest eine Ausnehmung aufweisen, durch die das von der Lichtquelle bereitgestellte Licht in die Streuschale einspeisbar ist. Insbesondere könnte eine Anzahl und/oder Größe von Ausnehmungen der Oberfläche angepasst sein, um einen gewünschten Transmissionsgrad der Oberfläche zu erreichen. Vorzugsweise weist die Diffusoreinheit zumindest ein Filterelement auf, welches dazu vorgesehen ist, das von der Lichtquelle der Lichtquelleneinheit bereitgestellte Licht anzupassen, um das diffuse Beleuchtungslicht zu homogenisieren. Vorteilhaft reduziert und/oder streut das Filterelement eine Lichtintensität eines Lichtanteils des von der Lichtquelle der Lichtquelleneinheit bereitgestellten Lichts, welcher nicht in den Teilbereich einfällt, sodass die Lichtintensität des Lichtanteils nach der Filtereinheit identisch zu einer Lichtintensität des an dem Teilbereich reflektierten Lichtanteils ist und eine homogene Lichtintensität des diffusen Beleuchtungslichts gewährleistet ist. Das Filterelement ist vorzugsweise plattenförmig und/oder folienartig ausgebildet. Beispielsweise könnte das Filterelement als eine Ringfolie ausgebildet sein. Vorteilhaft kann ein lückenfreier Raumwinkelbereich des diffusen Beleuchtungslichts erreicht werden.

Denkbar wäre, dass beispielsweise die Streuschale an einem restlichen Diffusorelement durch zumindest eine Schnappverbindung und/oder Steckverbindung und/oder Klebeverbindung und/oder Schraubverbindung befestigt ist. Um eine Konstruktion des Diffusorelements zu vereinfachen, wird vorgeschlagen, dass das Diffusorelement einstückig, insbesondere einteilig, ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess. Unter "einteilig" soll insbesondere in einem Stück geformt verstanden werden. Vorzugsweise wird dieses eine Stück aus einem einzelnen Rohling, einer Masse und/oder einem Guss, beispielsweise in einem Spritzgussverfahren, insbesondere einem Ein- und/oder Mehrkomponenten-Spritzgussverfahren, hergestellt. Besonders bevorzugt wird das Diffusorelement durch ein additives Herstellverfahren, vorzugsweise durch ein 3D-Druckverfahren, hergestellt. Hierdurch kann eine Bauteileanzahl reduziert werden. Vorteilhaft kann eine Anzahl an Verfahrensschritten zur Herstellung des Diffusorelements reduziert werden. Besonders vorteilhaft kann eine Ausgestaltung des Diffusorelements auf einfache Weise angepasst werden, ohne dass aufwändige Änderungen des Herstellungsprozesses notwendig wären.

Ferner wird vorgeschlagen, dass die Diffusoreinheit eine Außenwandung aufweist, welche die Streuschale vollständig umschließt. Insbesondere weist die Außenwandung zumindest ein opakes Material auf. Denkbar wäre, dass die Außenwandung vollständig aus dem opaken Material besteht. Weiterhin wäre denkbar, dass die Außenwandung vollständig aus einem Mantel des Diffusorelements gebildet ist. Vorzugsweise weist die Außenwandung zumindest einen Mantel des Diffusorelements und zumindest einen vorzugsweise opaken Aufsatz auf. Insbesondere kann der Aufsatz dazu vorgesehen sein, das Diffusorelement an den Bildaufnehmer zu koppeln. Insbesondere weist der Aufsatz eine Aufnahme zur formschlüssigen Halterung des Bildaufnehmers auf. Beispielsweise könnte der Aufsatz durch zumindest eine Schnappverbindung und/oder Schraubverbindung an dem Bildaufnehmer befestigt sein. Bevorzugt ist der Aufsatz auf den Bildaufnehmer aufsteckbar. Insbesondere kann das Diffusorelement durch zumindest eine Schnappverbindung und/oder Steckverbindung, vorzugsweise zumindest eine Schraubverbindung an dem Aufsatz befestigt sein. Hierdurch kann insbesondere eine Beleuchtung des Beleuchtungsbereichs auf konstruktiv einfache Weise verbessert werden. Vorteilhaft kann durch die Außenwandung eine Ausbreitung des von der Lichtquelleneinheit bereitgestellten Lichts begrenzt werden. Besonders vorteilhaft kann ein Eintreten von Umgebungslicht in die Diffusoreinheit reduziert werden. Denkbar wäre, dass der Aufsatz eine Aufsatzaufnahme zur formschlüssigen Halterung des Diffusorelements aufweist.

Zudem wird vorgeschlagen, dass die passive Beleuchtungsvorrichtung eine Befestigungseinheit zur insbesondere abnehmbaren Befestigung der Diffusoreinheit an dem Bildaufnehmer aufweist. Insbesondere ist die Befestigungseinheit zumindest teilweise einstückig mit der Diffusoreinheit ausgebildet. Darunter, dass die Befestigungseinheit "zumindest teilweise einstückig" mit der Diffusoreinheit ausgebildet ist, soll insbesondere verstanden werden, dass die Diffusoreinheit und die Befestigungseinheit zumindest ein gemeinsames Bauteil aufweisen. Vorteilhaft ist das gemeinsame Bauteil der Aufsatz. Hierdurch kann insbesondere eine Befestigung und/oder Lösung der Diffusoreinheit an/von dem Bildaufnehmer vereinfacht werden. Vorteilhaft kann die Befestigungseinheit als ein Adapter verwendet werden und ermöglichen, dass eine Diffusoreinheit an vielen verschiedenen Bildaufnehmern befestigbar ist.

Ferner wird ein System, insbesondere ein Codelese- und/oder Codeverifikationssystem, vorgeschlagen mit der passiven Beleuchtungsvorrichtung und dem Bildaufnehmer, insbesondere dem Codelese- und/oder Codeverifikationsgerät. Hierdurch kann insbesondere eine Konstruktion vereinfacht werden.

Denkbar wäre, dass die Lichtquelleneinheit mehrere Lichtquellen mit zueinander unterschiedlichen Ausrichtungen aufweist. Um eine Konstruktion des Bildaufnehmers zu vereinfachen, wird vorgeschlagen, dass sämtliche Lichtquellen der Lichtquelleneinheit parallel zueinander ausgerichtet sind. Vorzugsweise stellen sämtliche Lichtquellen Licht in zueinander deckungs- und orientierungsgleichen, benachbart angeordneten Raumwinkelbereichen bereit. Insbesondere sind die Lichtquellen der Lichtquelleneinheit in einem ebenen Oval, vorzugsweise in einem ebenen Kreis und/oder in einem ebenen Quadrat angeordnet. Vorteilhaft kann auf anders ausgerichtete Lichtquellen, welche beispielsweise auf das optische Element gerichtet sind, verzichtet werden.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine schematische Darstellung eines Systems mit einer passiven Beleuchtungsvorrichtung und einem Bildaufnehmer in einer Explosionsdarstellung,
Fig. 2 eine schematische Darstellung einer Befestigungseinheit der passiven Beleuchtungsvorrichtung in einer Schrägansicht von oben,
Fig. 3 eine schematische Darstellung eines Diffusorelements der passiven Beleuchtungsvorrichtung in einer Schrägansicht von oben,
Fig. 4 eine schematische Darstellung des Diffusorelements in einer Schnittansicht,
Fig. 5 eine schematische Darstellung eines optischen Elements der passiven Beleuchtungsvorrichtung in einer Draufsicht,
Fig. 6 eine schematische Darstellung einer Streuschale einer alternativen passiven Beleuchtungsvorrichtung in einer Schrägansicht von oben und
Fig. 7 eine schematische Darstellung einer Streuschale einer weiteren alternativen passiven Beleuchtungsvorrichtung in einer seitlichen Schrägansicht.

### Beschreibung der Ausführungsbeispiele

Von mehrfach vorhandenen Objekten ist in den Figuren jeweils lediglich eines mit einem Bezugszeichen versehen. Die Begriffe "oben" und "unten" in der Beschreibung der Ausführungsbeispiele beziehen sich auf die übliche Einbaulage, wo ein zu scannendes Objekt unten und ein Bildaufnehmer oben angeordnet sind.

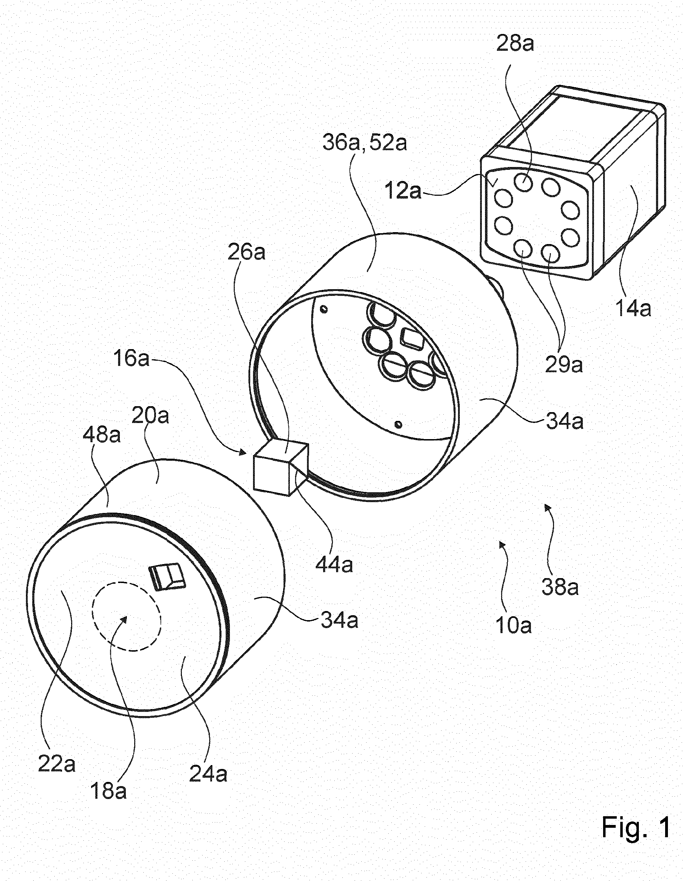

Die Figur 1 zeigt ein System 38a, und zwar ein Codelese- und/oder Codeverifikationssystem. Das System 38a weist einen Bildaufnehmer 14a auf. Der Bildaufnehmer 14a ist als ein aus dem Stand der Technik bekanntes Codelesegerät und/oder Codeverifikationsgerät ausgebildet. Der Bildaufnehmer 14a weist eine Lichtquelleneinheit 12a auf. Die Lichtquelleneinheit 12a weist Lichtquellen 28a, 29a auf, welche in Form eines ebenen Kreises angeordnet sind. Die Lichtquelleneinheit 12a weist sechs Lichtquellen 28a und zwei Lichtquellen 29a auf. Alternativ wäre auch eine andere Anzahl an Lichtquellen 28a, 29a und eine andere Anordnung der Lichtquellen 28a, 29a denkbar. Sämtliche der Lichtquellen 28a, 29a sind parallel zueinander ausgerichtet. Die Lichtquellen 28a, 29a sind zueinander identisch ausgebildet, weshalb im Folgenden lediglich eine der Lichtquellen 28a, 29a beschrieben wird.

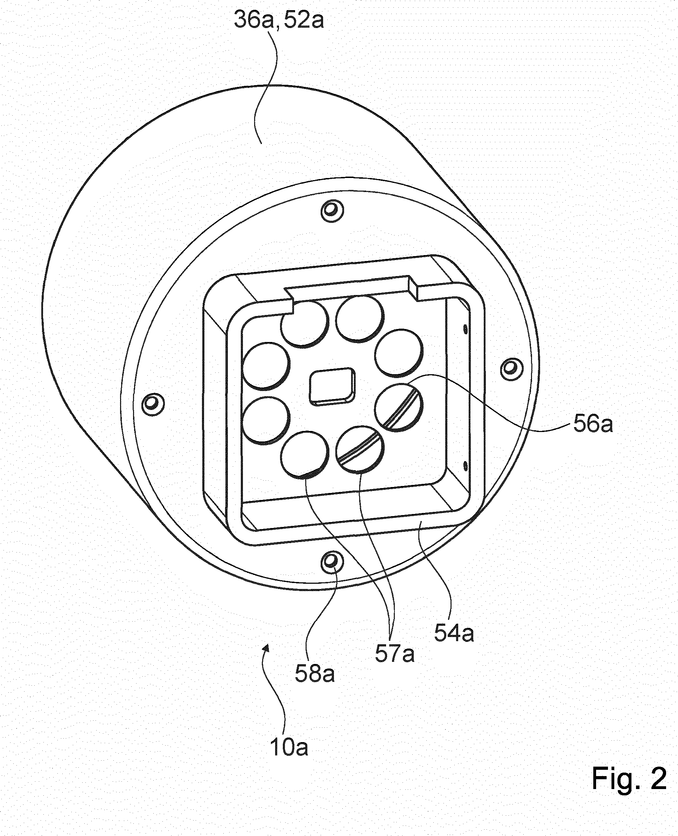

Das System 38a weist eine passive Beleuchtungsvorrichtung 10a auf, von welcher Teile in den Figuren 2 bis 5 näher dargestellt sind.

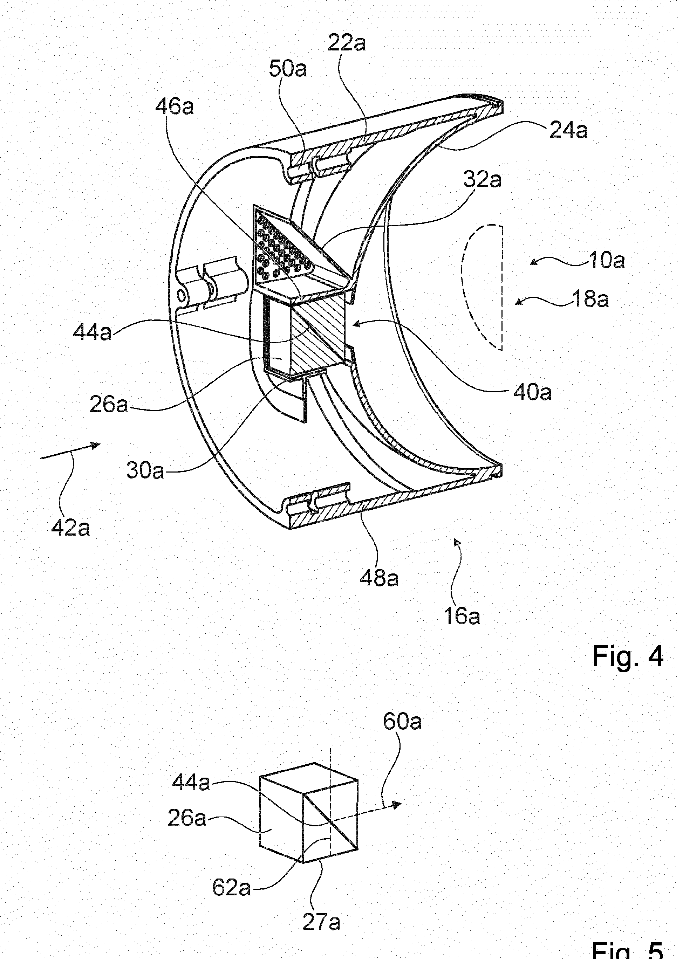

Die passive Beleuchtungsvorrichtung 10a ist zur Verwendung mit der Lichtquelleneinheit 12a vorgesehen. Die passive Beleuchtungsvorrichtung 10a weist eine Diffusoreinheit 16a auf. Die Diffusoreinheit 16a ist dazu vorgesehen, von der Lichtquelleneinheit 12a bereitgestelltes Licht in diffuses Beleuchtungslicht zur Beleuchtung eines Beleuchtungsbereichs 18a umzuwandeln (vgl. Figuren 1 und 4). Die Diffusoreinheit 16a weist ein Diffusorelement 20a auf, welches in Figur 4 näher dargestellt ist. Das Diffusorelement 20a ist vollständig aus einem transluzenten Material ausgebildet. Das Diffusorelement 20a besteht aus Polyamid. Alternativ könnte das Diffusorelement 20a aus anderen, dem Fachmann als sinnvoll erscheinenden Materialien, wie beispielsweise anderen Kunststoffen, insbesondere ABS, PP, PU und/oder PC, und/oder Quarzglas, bestehen. Das Diffusorelement 20a ist einteilig ausgebildet. Das Diffusorelement 20a ist durch ein 3D-Druckverfahren hergestellt.

Das Diffusorelement 20a weist eine Streuschale 22a auf. Die Streuschale 22a dient der Streuung des von der Lichtquelleneinheit 12a bereitgestellten Lichts zur Bereitstellung zumindest eines Lichtanteils des diffusen Beleuchtungslichts. Die Streuschale 22a weist eine Innenfläche 24a auf. Die Innenfläche 24a ist als eine Teilfläche einer imaginären Kugel ausgebildet. Die Streuschale 22a weist einen Durchlass 40a auf. Der Durchlass 40a ist dazu vorgesehen, von dem Beleuchtungsbereich 18a reflektiertes Licht zu einer Detektoreinheit (nicht dargestellt) des Bildaufnehmers 14a durchzulassen. Der Durchlass 40a ist an einem maximal von dem Beleuchtungsbereich 18a beabstandeten Bereich der Streuschale 22a angeordnet. Der Durchlass 40a ist als eine Ausnehmung der Streuschale 22a ausgebildet.

Das Diffusorelement 20a weist einen Mantel 48a auf. Der Mantel 48a weist eine zylindermantelförmige Grundform auf. Bei einer Betrachtung ausgehend von dem Beleuchtungsbereich 18a umgibt der Mantel 48a die Streuschale 22a vollständig. Der Mantel 48a weist Schraubgewinde 50a auf. Die Schraubgewinde 50a dienen einer indirekten Befestigung des Diffusorelements 20a an dem Bildaufnehmer 14a. Alternativ könnte der Mantel 48a Einlegebereiche für Muttern und/oder Schnappelemente und/oder Steckelemente aufweisen.

Die Diffusoreinheit 16a weist ein optisches Element 26a auf, welches in Figur 5 näher dargestellt ist. Das optische Element 26a ist dazu vorgesehen, diffuses Beleuchtungslicht, welches aus von den zwei Lichtquellen 29a der Lichtquelleneinheit 12a bereitgestelltem Licht erzeugt ist, in Richtung des Beleuchtungsbereichs 18a umzulenken. Alternativ könnte das optische Element 26a das von den zwei und/oder von beliebigen der sechs Lichtquellen 28a der Lichtquelleneinheit 12a bereitgestellte Licht in Richtung des Beleuchtungsbereichs 18a umlenken. Das optische Element 26a lenkt das diffuse Beleuchtungslicht durch einmalige Reflexion um. Das optische Element 26a ist dazu vorgesehen, von dem Beleuchtungsbereich 18a reflektiertes Licht, welches insbesondere den Durchlass 40a passiert hat, durchzulassen. Das optische Element 26a weist einen halbdurchlässigen Spiegel 44a auf. Der halbdurchlässige Spiegel 44a lenkt einen Lichtanteil 60a des diffusen Beleuchtungslichts in Richtung des Beleuchtungsbereichs 18a um. Der halbdurchlässige Spiegel 44a lässt einen weiteren Lichtanteil 62a des diffusen Beleuchtungslichts passieren. Das optische Element 26a ist als ein Strahlteilerwürfel ausgebildet. Der halbdurchlässige Spiegel 44a bildet eine Diagonalfläche des optischen Elements 26a.

Das optische Element 26a weist ein Absorptionselement 27a auf. Das Absorptionselement 27a ist dazu vorgesehen, den weiteren Lichtanteil 62a zu absorbieren. Das Absorptionselement 27a ist als eine Beschichtung einer Seite des optischen Elements 26a ausgebildet. Das Absorptionselement 27a weist einen Brechungsindex auf, welcher identisch zu einem Brechungsindex eines restlichen optischen Elements ist.

Das Diffusorelement 20a weist eine Aufnahme 30a auf. Die Aufnahme 30a dient einer formschlüssigen Halterung des optischen Elements 26a. Die Aufnahme 30a ist als ein Rahmen ausgebildet. Die Aufnahme 30a weist eine zum optischen Element 26a passende Einführöffnung auf. Die Einführöffnung definiert eine Einführrichtung 42a, entlang der das optische Element 26a in die Aufnahme 30a einführbar ist. Die Aufnahme 30a ist einstückig mit der Streuschale 22a ausgebildet. Alternativ könnte die Aufnahme 30a durch zumindest eine Schnappverbindung und/oder Steckverbindung und/oder Klebeverbindung an der Streuschale 22a befestigt sein. Die Aufnahme 30a ist bei einer Betrachtung vom Beleuchtungsbereich 18a ausgehend hinter dem Durchlass 40a angeordnet.

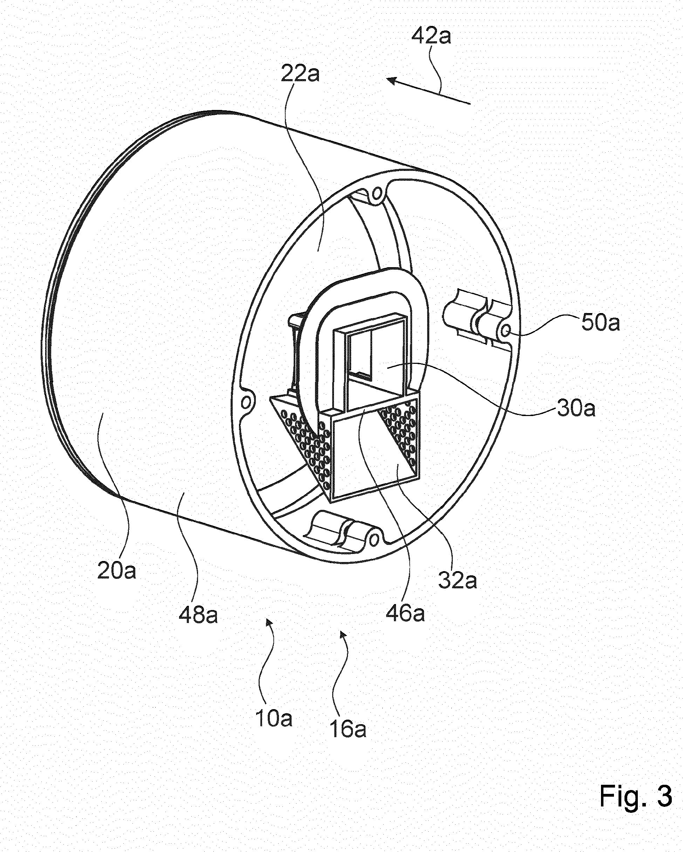

Die Diffusoreinheit 16a weist einen Teilbereich 32a auf (vgl. Figuren 3 und 4). Der Teilbereich 32a ist dazu vorgesehen, das von den zwei Lichtquellen 29a bereitgestellte Licht in das optische Element 26a einzuspeisen. Alternativ oder zusätzlich könnte der Teilbereich 32a dazu vorgesehen sein, das von beliebigen der sechs Lichtquellen 28a bereitgestellte Licht in das optische Element 26a einzuspeisen, weshalb im Folgenden im Zusammenhang mit Merkmalen des Teilbereichs 32a eine der Lichtquellen 28a, 29a genannt wird, welche beliebig ist. Der Teilbereich 32a ist als ein Teil des Diffusorelements 20a ausgebildet. Der Teilbereich 32a ist als ein Flächenelement des Diffusorelements 20a ausgebildet. Der Teilbereich 32a ist entlang der Einführrichtung 42a nach der Lichtquelle 28a, 29a angeordnet. Der Teilbereich 32a trägt dazu bei, dass das von der Lichtquelle 28a, 29a bereitgestellte Licht zumindest teilweise in das optische Element 26a einfällt. Der Teilbereich 32a ist zusätzlich dazu vorgesehen, das von der Lichtquelle 28a, 29a bereitgestellte Licht zumindest teilweise in die Streuschale 22a einzuspeisen. Der Teilbereich 32a ist bei einer Betrachtung ausgehend vom Beleuchtungsbereich 18a hinter der Streuschale 22a angeordnet. Der Teilbereich 32a ist einstückig mit der Aufnahme 30a ausgebildet. Alternativ könnte der Teilbereich 32a durch eine Schnappverbindung und/oder Steckverbindung und/oder Klebeverbindung an der Aufnahme 30a befestigt sein. Das Diffusorelement 20a weist eine Zwischenwand 46a auf. Die Zwischenwand 46a ist zwischen dem Teilbereich 32a und der Aufnahme 30a angeordnet. Die Zwischenwand 46a ist dazu vorgesehen, das von den zwei der Lichtquellen 28a bereitgestellte und von dem Teilbereich 32a umgelenkte Licht in diffuses Licht umzuwandeln. Alternativ könnte das Diffusorelement 20a frei von Zwischenwänden sein.

Die Diffusoreinheit 16a weist eine Außenwandung 34a auf. Die Außenwandung 34a umschließt die Streuschale 22a vollständig. Die Außenwandung 34a weist den Mantel 48a auf. Die Außenwandung 34a weist einen Aufsatz 52a auf, welcher in Figur 2 näher dargestellt ist. Der Aufsatz 52a ist vollständig aus einem opaken Material ausgebildet. Der Aufsatz 52a weist eine Aufsatzaufnahme 54a auf. Die Aufsatzaufnahme 54a ist zur formschlüssigen Halterung des Bildaufnehmers 14a vorgesehen. Die Aufsatzaufnahme 54a ist als eine Erhöhung des Aufsatzes 52a ausgebildet. Der Aufsatz 52a weist Löcher 56a, 57a auf. Die Löcher 56a, 57a sind dazu vorgesehen, von der Lichtquelleneinheit 12a bereitgestelltes Licht durchzulassen. Die Löcher 56a, 57a bilden einen Lichtdurchlassbereich der Beleuchtungsvorrichtung 10a. Der Aufsatz 52a weist sechs Löcher 56a auf, welche zu den sechs Lichtquellen 28a korrespondierend angeordnet sind. Der Aufsatz 52a weist zwei Löcher 57a auf, welche zu den zwei Lichtquellen 29a korrespondierend angeordnet sind. Die zwei Löcher 57a sind dazu vorgesehen, von den zwei Lichtquellen 29a bereitgestelltes Licht zum Teilbereich 32a durchzulassen. Alternativ könnte der Aufsatz 52a eine beliebige andere, zu einer Anzahl an Lichtquellen 28a, 29a der Lichtquelleneinheit 12a korrespondierende, Anzahl an Löchern 56a, 57a aufweisen.

Alternativ und/oder zusätzlich könnte der Aufsatz 52a ein Filterelement (nicht dargestellt) aufweisen. Das Filterelement dient einer Homogenisierung und/oder Streuung einer Lichtintensität des diffusen Beleuchtungslichts. Das Filterelement könnte vor den Löchern 56a, 57a angeordnet sein und beispielsweise eine Lichtintensität von Licht, welches durch die Löcher 56a einfällt, reduzieren.

Der Aufsatz 52a weist weitere Schraubgewinde 58a auf. Alternativ könnte der Aufsatz 52a weitere Schnappelemente und/oder weitere Steckelemente aufweisen. Die weiteren Schraubgewinde 58a korrespondieren mit den Schraubgewinden 50a zur Befestigung des Diffusorelements 20a an dem Aufsatz 52a. In einem montierten Zustand (nicht dargestellt) der Beleuchtungsvorrichtung 10a sind die Schraubgewinde 50a und die weiteren Schraubgewinde 58a jeweils entlang der Einführrichtung 42a aufeinander folgend angeordnet. In dem montierten Zustand nehmen die Schraubgewinde 50a und die weiteren Schraubgewinde 58a jeweils gemeinsame Schrauben auf. Die Schrauben fixieren den Aufsatz 52a und das Diffusorelement 20a relativ zueinander. In dem montierten Zustand ist die Beleuchtungsvorrichtung 10a als Ganzes auf den Bildaufnehmer 14a aufsteckbar.

Die passive Beleuchtungsvorrichtung 10a weist eine Befestigungseinheit 36a auf. Die Befestigungseinheit 36a ist zur abnehmbaren Befestigung der Diffusoreinheit 16a an dem Bildaufnehmer 14a vorgesehen. Die Befestigungseinheit 36a ist als ein Teil der Diffusoreinheit 16a ausgebildet. Die Befestigungseinheit 36a weist den Aufsatz 52a auf.

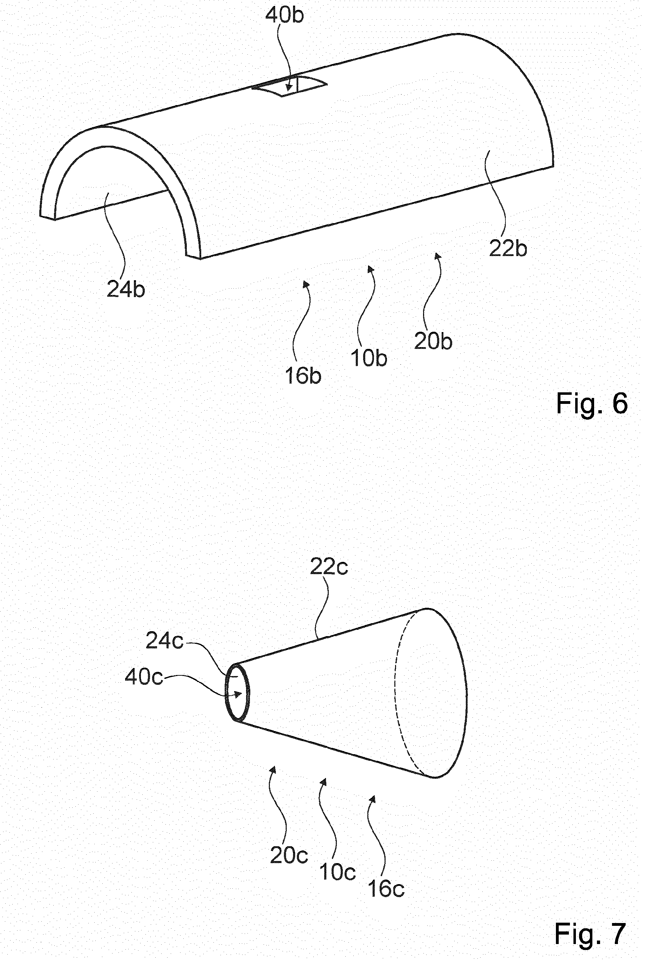

In den Figuren 6 und 7 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 5 verwiesen werden kann. Zur Unterscheidung der Ausführungsbeispiele ist der Buchstabe a in den Bezugszeichen des Ausführungsbeispiels in den Figuren 1 bis 5 durch die Buchstaben b und c in den Bezugszeichen des Ausführungsbeispiels der Figuren 6 und 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 4 verwiesen werden.

Die Figur 6 zeigt vereinfacht und isoliert eine Streuschale 22b einer alternativen passiven Beleuchtungsvorrichtung 10b. Die Streuschale 22b weist eine Innenfläche 24b auf, welche als eine Teilfläche eines imaginären Zylinders ausgebildet ist. Die Innenfläche 24b ist als eine Mantelhälfte des imaginären Zylinders ausgebildet. Die Figur 7 zeigt vereinfacht und isoliert eine Streuschale 22c einer weiteren alternativen Beleuchtungsvorrichtung 10c. Die Streuschale 22c weist eine Innenfläche 24c auf, welche als eine Teilfläche eines imaginären Konus, und zwar als eine Mantelfläche eines imaginären Kegelstumpfes, ausgebildet ist.

### Bezugszeichen

- 10: Beleuchtungsvorrichtung
- 12: Lichtquelleneinheit
- 14: Bildaufnehmer
- 16: Diffusoreinheit
- 18: Beleuchtungsbereich
- 20: Diffusorelement
- 22: Streuschale
- 24: Innenfläche
- 26: optisches Element
- 27: Absorptionselement
- 28: Lichtquelle
- 29: Lichtquelle
- 30: Aufnahme
- 32: Teilbereich
- 34: Außenwandung
- 36: Befestigungseinheit
- 38: System
- 40: Durchlass
- 42: Einführrichtung
- 44: halbdurchlässiger Spiegel
- 46: Zwischenwand
- 48: Mantel
- 50: Schraubgewinde
- 52: Aufsatz
- 54: Aufsatzaufnahme
- 56: Loch
- 57: Loch
- 58: weiteres Schraubgewinde
- 60: Lichtanteil
- 62: weiterer Lichtanteil

## Patentansprüche

1. Passive Beleuchtungsvorrichtung (10a-c) zur Verwendung mit zumindest einer Lichtquelleneinheit (12a) eines Bildaufnehmers (14a), wobei die passive Beleuchtungsvorrichtung (10a-c) zumindest eine Diffusoreinheit (16a-c) aufweist, welche dazu vorgesehen ist, von der Lichtquelleneinheit (12a) bereitgestelltes Licht in zumindest im Wesentlichen diffuses Beleuchtungslicht zur Beleuchtung zumindest eines Beleuchtungsbereichs (18a) umzuwandeln, und welche zumindest ein Diffusorelement (20a-c) mit zumindest einer Streuschale (22a-c) zur Streuung des Lichts aufweist, wobei die Streuschale (22a-c) eine bei einer Betrachtung aus dem Beleuchtungsbereich (18a) heraus konkave Formgebung aufweist, wobei die Diffusoreinheit (16a-c) zumindest ein optisches Element (26a) aufweist, welches dazu vorgesehen ist, von zumindest einer Lichtquelle (28a) der Lichtquelleneinheit (12a) bereitgestelltes Licht in Richtung des Beleuchtungsbereichs (18a) umzulenken, wobei das optische Element (26a) als ein Strahlteilerwürfel ausgebildet ist, **dadurch gekennzeichnet, dass** das Diffusorelement (20a-c) zumindest eine Aufnahme (30a) zur formschlüssigen Halterung des optischen Elements (26a) aufweist, wobei das Diffusorelement (20a-c) zumindest einen Teilbereich (32a) aufweist, welcher dazu vorgesehen ist, von der Lichtquelle (28a) bereitgestelltes Licht in das optische Element (26a) einzuspeisen.

2. Passive Beleuchtungsvorrichtung (10a) nach Anspruch 1, **dadurch gekennzeichnet, dass** die Streuschale (22a) zumindest eine Innenfläche (24a) aufweist, welche als eine Teilfläche eines imaginären Ovoid ausgebildet ist.

3. Passive Beleuchtungsvorrichtung (10b) nach Anspruch 1, **dadurch gekennzeichnet, dass** die Streuschale (22b) zumindest eine Innenfläche (24b) aufweist, welche als eine Teilfläche eines imaginären Zylinders ausgebildet ist.

4. Passive Beleuchtungsvorrichtung (10c) nach Anspruch 1, **dadurch gekennzeichnet, dass** die Streuschale (22c) zumindest eine Innenfläche (24c) aufweist, welche als eine Teilfläche eines imaginären Konus ausgebildet ist.

5. Passive Beleuchtungsvorrichtung (10a-c) nach einem der vorhergehenden Ansprüche, **dadurch gekennzeichnet, dass** das optische Element (26a) dazu vorgesehen ist, von dem Beleuchtungsbereich (18a) reflektiertes Licht zumindest teilweise durchzulassen.

6. Passive Beleuchtungsvorrichtung (10a-c) nach einem der vorhergehenden Ansprüche, **dadurch gekennzeichnet, dass** das optische Element (26a) zumindest einen halbdurchlässigen Spiegel (44a) aufweist.

7. Passive Beleuchtungsvorrichtung (10a-c) nach einem der vorhergehenden Ansprüche, **dadurch gekennzeichnet, dass** der Teilbereich (32a) zusätzlich dazu vorgesehen ist, von der Lichtquelle (28a) bereitgestelltes Licht in die Streuschale (22a-c) einzuspeisen.

8. Passive Beleuchtungsvorrichtung (10a-c) nach einem der vorhergehenden Ansprüche, **dadurch gekennzeichnet, dass** das Diffusorelement (20a-c) einstückig ausgebildet ist.

9. Passive Beleuchtungsvorrichtung (10a-c) nach einem der vorhergehenden Ansprüche, **dadurch gekennzeichnet, dass** die Diffusoreinheit (16a-c) eine Außenwandung (34a) aufweist, welche die Streuschale (22a-c) vollständig umschließt.

10. Passive Beleuchtungsvorrichtung (10a-c) nach einem der vorhergehenden Ansprüche, **gekennzeichnet durch** eine Befestigungseinheit (36a) zur abnehmbaren Befestigung der Diffusoreinheit (16a-c) an dem Bildaufnehmer (14a).

11. System (38a) mit zumindest einer passiven Beleuchtungsvorrichtung (10a) nach einem der vorhergehenden Ansprüche und einem Bildaufnehmer (14a) mit zumindest einer Lichtquelleneinheit (12a).

12. System (38a) nach Anspruch 11, **dadurch gekennzeichnet, dass** sämtliche Lichtquellen (28a) der Lichtquelleneinheit (12a) parallel zueinander ausgerichtet sind.

## Claims

1. A passive illumination device (10a-c) for use with at least one light source unit (12a) of an image receiver (14a), the passive illumination device (10a-c) comprising at least one diffuser unit (16a-c) configured to convert light provided by the light source unit (12a) into at least substantially diffuse illumination light for illuminating at least one illumination region (18a) and comprising at least one diffuser element (20a-c) having at least one diffusion shell (22a-c) for diffusing the light, wherein the diffusion shell (22a-c), seen from the illumination region (18a), has a concave shape, wherein the diffuser unit (16a-c) comprises at least one optical element (26a) configured to deflect light provided by at least one light source (28a) of the light source unit (12a) toward the illumination region (18a), wherein the optical element (26a) is implemented as a beamsplitter cube, **characterized in that** the diffuser element (20a-c) comprises at least one receptacle (30a) for positively holding the optical element (26a), wherein the diffuser element (20a-c) comprises at least one subregion (32a) configured to feed light provided by the light source (28a) into the optical element (26a).

2. The passive illumination device (10a) of claim 1, **characterized in that** the diffusion shell (22a) comprises at least one inner surface (24a) which is implemented as a partial surface of an imaginary ovoid.

3. The passive illumination device (10b) of claim 1, **characterized in that** the diffusion shell (22b) comprises at least one inner surface (24b) which is implemented as a partial surface of an imaginary cylinder.

4. The passive illumination device (10c) of claim 1, **characterized in that** the diffusion shell (22c) comprises at least one inner surface (24c) which is implemented as a partial surface of an imaginary cone.

5. The passive illumination device (10a-c) of any one of the preceding claims, **characterized in that** the optical element (26a) is configured to let light reflected by the illumination region (18a) pass at least partially.

6. The passive illumination device (10a-c) of any one of the preceding claims, **characterized in that** the optical element (26a) comprises at least one semi-permeable mirror (44a).

7. The passive illumination device (10a-c) of any one of the preceding claims, **characterized in that** the subregion (32a) is additionally configured to feed light provided by the light source (28a) into the diffusion shell (22a-c).

8. The passive illumination device (10a-c) of any one of the preceding claims, **characterized in that** the diffuser element (20a-c) is integrally formed.

9. The passive illumination device (10a-c) of any one of the preceding claims, **characterized in that** the diffuser unit (16a-c) comprises an outer wall (34a) which fully encloses the diffusion shell (22a-c).

10. The passive illumination device (10a-c) of any one of the preceding claims, **characterized by** a fastening unit (36a) for detachably fastening the diffuser unit (16a-c) to the image receiver (14a).

11. A system (38a) comprising at least one passive illumination device (10a) of any one of the preceding claims and an image receiver (14a) having at least one light source unit (12a).

12. The system (38a) of claim 11, **characterized in that** all light sources (28a) of the light source unit (12a) are oriented parallel to one another.

## Revendications

1. Dispositif d'éclairage passif (10a-c) destiné à être utilisé avec au moins une unité de sources de lumière (12a) d'un capteur d'image (14a), le dispositif d'éclairage passif (10a-c) comprenant au moins une unité de diffusion (16a-c) qui est prévue pour convertir la lumière fournie par l'unité de sources de lumière (12a) en une lumière d'éclairage au moins sensiblement diffuse pour éclairer au moins une zone d'éclairage (18a), et qui comprend au moins un élément diffuseur (20a-c) avec au moins une coque de diffusion (22a-c) pour diffuser la lumière, la coque de diffusion (22a-c) présentant une forme concave lorsqu'elle est observée depuis la zone d'éclairage (18a), dans lequel l'unité de diffusion (16a-c) comprend au moins un élément optique (26a) qui est prévu pour dévier la lumière fournie par au moins une source de lumière (28a) de l'unité de sources de lumière (12a) en direction de la zone d'éclairage (18a), l'élément optique (26a) étant réalisé sous la forme d'un cube séparateur de faisceau, **caractérisé en ce que** l'élément diffuseur (20a-c) comprend au moins un logement (30a) pour maintenir l'élément optique (26a) par complémentarité de forme, l'élément diffuseur (20a-c) présentant au moins une zone partielle (32a) qui est prévue pour injecter la lumière fournie par la source de lumière (28a) dans l'élément optique (26a).

2. Dispositif d'éclairage passif (10a) selon la revendication 1, **caractérisé en ce que** la coque de diffusion (22a) présente au moins une surface intérieure (24a) qui est formée comme une surface partielle d'un ovoïde imaginaire.

3. Dispositif d'éclairage passif (10b) selon la revendication 1, **caractérisé en ce que** la coque de diffusion (22b) présente au moins une surface intérieure (24b) qui est formée comme une surface partielle d'un cylindre imaginaire.

4. Dispositif d'éclairage passif (10c) selon la revendication 1, **caractérisé en ce que** la coque de diffusion (22c) présente au moins une surface intérieure (24c) qui est formée comme une surface partielle d'un cône imaginaire.

5. Dispositif d'éclairage passif (10a-c) selon l'une quelconque des revendications précédentes, **caractérisé en ce que** l'élément optique (26a) est prévu pour laisser passer au moins partiellement la lumière réfléchie par la zone d'éclairage (18a).

6. Dispositif d'éclairage passif (10a-c) selon l'une quelconque des revendications précédentes, **caractérisé en ce que** l'élément optique (26a) comprend au moins un miroir semi-transparent (44a).

7. Dispositif d'éclairage passif (10a-c) selon l'une quelconque des revendications précédentes, **caractérisé en ce que** la zone partielle (32a) est en outre prévue pour injecter la lumière fournie par la source de lumière (28a) dans la coque de diffusion (22a-c).

8. Dispositif d'éclairage passif (10a-c) selon l'une quelconque des revendications précédentes, **caractérisé en ce que** l'élément diffuseur (20a-c) est réalisé d'une seule pièce.

9. Dispositif d'éclairage passif (10a-c) selon l'une quelconque des revendications précédentes, **caractérisé en ce que** l'élément diffuseur (16a-c) comprend une paroi extérieure (34a) qui entoure complètement la coque de diffusion (22a-c).

10. Dispositif d'éclairage passif (10a-c) selon l'une quelconque des revendications précédentes, **caractérisé par** une unité de fixation (36a) pour la fixation amovible de l'unité de diffusion (16a-c) sur le capteur d'image (14a).

11. Système (38a) comprenant au moins un dispositif d'éclairage passif (10a) selon l'une quelconque des revendications précédentes et un capteur d'image (14a) comprenant au moins une unité de sources de lumière (12a).

12. Système (38a) selon la revendication 11, **caractérisé en ce que** toutes les sources de lumière (28a) de l'unité de sources de lumière (12a) sont orientées parallèlement les unes aux autres.
